# EUROPEAN PATENT SPECIFICATION

(11) **EP 3 659 755 B1**
(45) Date of publication and mention of the grant of the patent: **24.03.2021**
(21) Application number: 18801007.8
(22) Date of filing: 26.07.2018
(51) Int. Cl.: B25J 5/00, B62D 11/04, B62D 61/06, B66F 9/06, G05D 1/02

(54) **OMNIDIRECTIONAL PLATFORM AND OMNIDIRECTIONAL TRANSPORTER**
PLATAFORMA OMNIDIRECCIONAL Y TRANSPORTADOR OMNIDIRECCIONAL
PLATE-FORME OMNIDIRECTIONNELLE ET TRANSPORTEUR OMNIDIRECTIONNEL

(30) Priority: 26.07.2017 ES 201730976
(43) Date of publication of application: 03.06.2020
(73) Proprietor: Universitat Politècnica De Catalunya, 08034 Barcelona (ES)
(72) Inventor: CANUTO GIL, Juan José, 08012 Barcelona (ES); DOMENECH MESTRES, Carles, 08034 Barcelona (ES)
(74) Representative: Juncosa Miró, Jaime
(86) International application number: PCT/ES2018/070534
(87) International publication number: WO 2019/020861

(56) References cited:
- CN-A- 105 644 643
- DE-A1-102012 023 999
- JP-A- 2000 353 017
- JP-A- 2016 062 441
- JP-A- 2017 045 250
- JP-U- S6 133 105
- US-A1- 2001 008 985
- US-A1- 2007 063 500

## Description

### Field of the Art

The present invention relates to the omnidirectional platform. It will be understood that an omnidirectional platform is a mobile vehicle that can move in any horizontal direction.

The proposed platform is of the type that achieve said omnidirectional capacity using only single motorised wheels arranged and controlled in a way that allows said omnidirectionality, without the need to use complex wheels such as spherical wheels, composite wheels, wheels with the capability of lateral translation, etc.

### State of the Art

Document EP0716974 describes an omnidirectional platform that, according to the embodiment shown in Figs. 22 and 23 of said document, includes a first module provided with two coaxial and opposite drive wheels, said first module being connected through a vertical axle with a second module supported on four spherical wheels. The controlled driving of the drive wheels of the first module and of the rotation of the vertical axle allow to obtain an omnidirectional displacement of the omnidirectional platform, allowing any translational displacement and any rotation of the second module.

However, in the solution described in that document EP0716974, the second module is supported directly on the ground by means of four omnidirectional wheels located on its four corners, such that any weight supported on said second module is directly transmitted to the ground without passing through the first module. Furthermore, this solution requires that the wheels on which the second module is supported be omnidirectional wheels, such as, for example, the spherical wheels shown in the Figures attached to said document, which are expensive and hard to maintain and are not suitable for rough terrains.

Furthermore, according to the construction proposed in EP0716974, the actuation of the vertical axle that connects the first module with the second module must produce a relative rotation between both modules; however, depending on the frictional force produced by the four omnidirectional wheels on which the second module is supported, and the frictional force produced by the two drive wheels of the first module, said actuation of the vertical axle will keep the first module static, producing the rotation of the second module or, on the contrary, it will produce a rotation of the first module keeping the second module static. This effect may be produced unexpectedly, for example in the case that dirt, grains of sand, a step, a ledge, a change in paving or alike blocks or increases the friction of one or several of the four omnidirectional wheels on which the second module is supported.

Furthermore, the solution described in that document EP0716974 requires six wheels, four omnidirectional wheels attached to the second module and two drive wheels attached to the first module, which means that the displacement of this omnidirectional platform is only possible on smooth ground that guarantees the correct and simultaneous contact of all six wheels of the omnidirectional platform, since the steering control requires ensuring permanent contact of the drive wheels with the ground, and the document does not mention any solution which allows the omnidirectional platform to adapt itself to rough terrains keeping the permanent contact of the drive wheels with the ground.

From the above, it can be concluded that the solution described in document EP0716974 requires a perfectly flat and uniform ground and that, in spite of it, even the smallest imperfection or dirt present on said ground may affect the relative rotation of the first module with respect to the second module, causing a discoordination of the displacement of the platform.

Document JP2007152019A shows in its Fig. 2 and in the text a similar embodiment to the one described with respect to document EP0716974, which, therefore, suffers from the same previously mentioned shortcomings. Other embodiments shown in this Japanese document require the use of complex wheels with the capability of lateral translation that, as has been previously mentioned, are expensive, hard to maintain, inadequate for rough terrains, and that also usually generate a light rattling during their displacement, thereby being barely adequate. Document JP2016062441 describes a platform including a first module comprising two parallel driven wheels and one caster wheel distributed in a triangular disposition and configured to obtain an omnidirectional movement of the platform only regulating the movement of said two driven wheels. Document JP2017045250, which is considered to be the closest prior art, describes a similar solution but further including a second module supported on said first module and rotative in regard to the center of the first module. None of said two documents provides a solution to allow the movement of the platform on non-flat surfaces.

Document US2001008985A1 describe an omnidirectional platform in which the driven wheels are located at an end of an articulated arm, providing a vertical movement to said driven wheel, but this swinging movement of the arm produces not only a vertical movement of the driven wheel but also a slight horizontal movement, which can affect at the movement of the omnidirectional platform if not considered when controlling the driving of the driven wheels.

### Brief Description of the Invention

The present invention concerns, according to a first aspect, an omnidirectional platform.

An omnidirectional platform is a mobile vehicle that may move in any horizontal direction, i.e., forwards, backwards, sideways by means of a lateral translation, diagonally, etc., and also carry out rotations on itself.

The proposed omnidirectional platform comprises, in a known mode:
- a first module that defines a rotation centre of the omnidirectional platform wherein a coordinate origin is located provided with an X axis, a Y axis and a Z axis orthogonal to each other, said first module being provided with, at least, a first drive wheel connected to a first horizontal axle parallel to the X axis and a second drive wheel connected to a second horizontal axle, both first and second axles being coplanar with the same plane parallel to the Z axis, said plane being separated a distance D from the Z axis, the first drive wheel being driven by means of a first actuator, and the second drive wheel being driven by means of a second actuator;
- a second module completely supported on the first module and connected thereto by means of a third vertical axle coaxial con the Z axis, the relative rotation of the second module and of the first module being driven by a third actuator, said second module defining a loading platform;
- a control device connected to the first, second and third actuators to control their coordinated actuation configured to obtain an omnidirectional displacement of the platform by means of a precise control of the displacement of the rotation centre, obtained by means of the actuation of the first and second actuators, and by means of a precise control of the orientation of the second module by means of the precise actuation of the third actuator;
- the first module also includes a free rotating rolling element, the contact points with the ground of the first drive wheel, of the second drive wheel and of the free rotating rolling element defining a supporting plane on the ground;
wherein the rotation centre is arranged in an area of the first module comprised between the first drive wheel, the second drive wheel and the free rotating rolling element; and
wherein at least one suspension device is interposed between the second module and any of the first drive wheel, the second drive wheel and the rolling element.

Therefore, the proposed omnidirectional platform includes a second module that defines a loading platform rotationally connected to a first module that integrates first and second drive wheels whose axles are coplanar on a vertical plane separated from the rotation axis between the first and second modules.

The independent actuation of both drive wheels and their control from the control device allow to determine a back and forth displacement of the omnidirectional platform, in a straight line if both first and second wheels rotate at an identical tangential velocity or determining a rotation of the omnidirectional platform if different tangential velocities are obtained in both drive wheels.

Additionally, said first and second wheels are separated from the third rotational axle, coaxial with the vertical Z axis, a distance D, said third axle determining the rotation of the first module with respect to the second module. This characteristic, along with the precise control of the first, second and third actuators, allows for a displacement of the first module governed by a tangential velocity, different from the first and second drive wheels, to determine a lateral translation displacement of the rotation centre of the platform, allowing that, if the rotation of said rotation centre is compensated for by means of the actuation of the third actuator, the second module have a transverse displacement.

In other words, through the combination of the precise and independent control of the back and forth movement of the first and second wheels, a displacement may be produced of the rotation centre of the first module in any direction without the need to use complex wheels that allow for a lateral translation, such as, for example, spherical wheels or composite wheels. By adding the rotation control of the second module with respect to the first module around the third axle, an omnidirectional platform is obtained.

Thus, it is then proposed that the first module have, in addition to the previously described first and second drive wheels that provide two contact points of the first module with the ground, a free rotating rolling element that provides a third contact point of the first module with the ground, thus achieving that the first module be stable and guaranteeing a perfect contact of the first module on the ground by means of said three contact points, even on rough ground.

It will be understood that the rolling element is a wheel or alike that allows for the transmission of vertical loads on a contact point with the ground, as well as allowing for a horizontal displacement without friction or with negligible friction. Said rolling element may have two degrees of freedom of horizontal displacement with scarce friction, such as, for example, a spherical wheel or, more preferably, a single degree of freedom with scarce friction, said rolling element being self-steerable in the displacement direction, such as, for example, a self-steerable wheel.

The second module will be supported on the first module, and therefore, it will not require its own wheels to support it, transmitting all the vertical loads to the first module and the latter to the ground through said three points of contact. To guarantee the stability of the omnidirectional platform it is required that the rotation centre be located within the area comprised between the two drive wheels and the free rotating element, since all of the load of the second module is transmitted to the first module through said rotation centre and, therefore, this rotation centre must be comprised between the three contact points with the ground to avoid the tipping over of the omnidirectional platform in certain cases.

By the first module having two drive wheels and a rolling element, it will have three points of contact with the ground, which guarantees a perfect stability and constant permanent contact of all the points of contact with the ground, thus guaranteeing that the rotation of the first and second drive wheels is correctly transmitted, and that, as a result, the control of the displacement of the omnidirectional platform is precise at all times even on rough ground, something that other solutions provided with more points of contact with the ground cannot guarantee without taking additional measures.

At least one suspension device is interposed between the second module and any one of the first drive wheel, the second drive wheel and the rolling element. This means that a suspension element dampens the transmission of stresses and movements between the second module and the first drive wheel, and/or between the second module and the second drive wheel, and/or between the second module and the rolling element. This will avoid the rattling of the omnidirectional platform even on rough terrain, and it will guarantee a perfect contact of the first and second wheels with the ground and of the rolling element with the ground, also keep the irregularities of the terrain from causing jolts.

The proposed omnidirectional platform also includes, in a novel way, the following characteristics:
- the suspension device is an arm with a first end hinged to the first module and a second end connected to the first wheel, to the second wheel or to the rolling element, said arm being attached to the first module by means of an elastic element, and wherein said arm includes an angular position sensor that measures the precise angular position of the arm at all times and transmits this information to the control device, which is configured to adjust the drive calculations of each wheel based on the precise position of the arm detected by said sensor.

According to this feature the suspension device consist of an arm with a first end hinged to the first module and a second end connected to one of the wheels or rolling elements, said arm being attached to the first module by means of an elastic element, such as, for example, a spring, a coil, a pneumatic piston or an elastomeric material. This allows the second end of the arm to be able to move vertically, modifying the angular position of said arm relative to the first module, as a result of a weight variation located on the omnidirectional platform, or as a result of terrain irregularities.

Said arm includes an angular position sensor, for example an encoder, which allows to know its precise position at all times. The control device will be configured to adjust the actuation calculations of each wheel based on the precise position of the arm detected by means of said sensor, since the displacement of the arm will slightly modify the position of the wheel, such that said adjusted calculation increases the precision of the displacement of the omnidirectional platform.

Additionally, it is proposed that the rolling element be a third free rotating single or double wheel around a fourth horizontal axle, said third wheel being self-steerable by means of a fifth vertical axle parallel to the Z axis misaligned relative to the centre of the third wheel, said fifth axle being freely hinged with respect to the first module by means of a bearing. This type of wheel is the wheel known as self-steerable wheels or caster wheels.

The free rotating horizontal axle allows the single wheel or double wheel to rotate with minimum resistance. By said wheel being attached to the first module through a fifth axle offset relative to the centre of the single wheel or to the centre of the double wheel assembly, when the displacement direction of the first module changes, the single or double wheel is re-steered and aligns with the new displacement direction of the first module, allowing a free rotation of said single or double wheel.

It is also contemplated that said at least one suspension device be, for example, an elastomeric material block connecting two independent segments of the platform, a segment integrating the second module and the other segment integrating, at least, the first wheel, the second wheel or the rolling element.

Alternatively, said at least one suspension device may consist of springs or coils which connect mutually hinged platform-independent segments, one segment integrating the second module and the other segment integrating, at least, the first wheel, the second wheel or the rolling element.

Alternatively, it is proposed that said rolling element consist of two self-steerable wheels connected to each other by a chassis that is itself attached to the first module by means of a horizontal linkage with its axis parallel to the Y axis. This solution will offer a total of four points of contact with the ground, but the two self-steerable wheels will be able to swing around the horizontal linkage, the self-steerable wheels adapting to rough terrain, thus maintaining at all times the contact with the terrain of said four points of contact even on rough terrain.

Alternatively, or additionally, the free rotating rolling element, the first wheel and/or the second wheel may include tyres, the rolling element being a free rotating single or double wheel such as the one previously described. The tyres allow for certain damping between the wheels and the omnidirectional platform, while better distributing the loads over the ground by increasing the contact surface, and increase the grip of the wheels with the ground, reducing the risk that the wheel skid or not produce a displacement by means of its rotation, even on rough terrain, or in the presence of loose particles. Said tyres may consist of an air tube or be only an elastomeric material coating arranged around the wheel.

The proposed omnidirectional platform may also include a position detector connected to the control device, configured to determine the position relative to the platform with respect to a number of fixed reference points external to said omnidirectional platform, said control device being configured to verify if an actual position detected by means of said position detector matches an estimated position calculated by the control device from the displacement of the platform commanded from said control device, detecting deviations of the platform, and the control device being configured to command a corrective displacement of the position of the platform based on the detected deviations. In other words, the control device compares, at all times, the actual position of the omnidirectional detected by means of the position detector with an estimated position that the control device itself calculates based on the theoretical displacement of the omnidirectional platform that should have been obtained from the control commands given to at least the first and second actuators of the drive wheels, thus allowing to detect deviations and applying corrections.

It is also proposed to include a communication device connected to the control device which allows for the transmission and reception of data and/or control commands.

In such a case, preferably, the control device will be configured to communicate with other proximal omnidirectional platforms and to coordinate its displacement with the displacement of said proximal omnidirectional platforms. This may allow to avoid collisions, command the flow of omnidirectional platforms, or even transport a large load simultaneously supported on several coordinated omnidirectional platforms.

According to a proposed embodiment, the third axle is located in the geometric centre of the second module.

It is also contemplated that the second module be supported on the first module, and also on at least another module of identical characteristics to the first module, the control device of the first module and of the other module, which is at least one, being shared and the control device being configured to coordinate the actuation of the first module and of the other module, which is at least one. As has been previously described, a suspension device will exist between the drive wheels, the rolling element and the second module, or the wheels will be provided with tyres. This will allow the omnidirectional platform provided with a first module and with another module supporting a second module, and therefore provided with six points of contact with the ground, to ensure the correct contact of said points of contact at all times, even on rough ground, thanks to said suspension device or said tyres.

The inclusion of a lifting device is also proposed that will allow to increase the existing separation between the upper face of the second module and the wheels, increasing, for example, the thickness of the second module by means of two horizontal surfaces parallel to a variable separation regulated by means of said lifting device, which may consist of a scissoring, piston mechanism or another equivalent mechanism. According to another embodiment, the lifting device may be included in the third axle, allowing for its lifting or extension, for example by means of a third telescopic axle. Another additional embodiment proposes the inclusion of the lifting device in the suspension device of the wheels, allowing to modify the existing separation between the first module and the wheels by means of the adjustment of said suspension device, for example using pneumatic suspensions and modifying its inner pressure by means of the lifting device, or by means of vertically displaceable suspensions by means of the lifting device.

This characteristic will allow to slide the transport platform under a package separated from the ground by end supports between which a sufficient space exists for the access of the omnidirectional platform and, by means of the actuation of the lifting device, proceed to lift the package supporting all its weight on the omnidirectional platform. An inverse operation will allow to place the package in a desired location.

Another embodiment of the invention proposes that the connection between the first module and the second module through the third axle include a levelling device with two axes of freedom, corresponding to the X and Y axes, configured to automatically keep the second module in a horizontal position independently of the tilting of the first module, for example if the first module is going up a ramp the second module may remain horizontal.

Said levelling device may consist, for example, of a cardan type joint between the third axle and the second module, said cardan type joint being actuated by means of motors, allowing to control the tilting with precision in each of the two axes of freedom.

In an alternative embodiment, the third axle remains at all times perpendicular to the second module, but is attached to the first module through a sub-chassis that can modify its tilting with respect to the first module also along two axes of freedom, using motors to regulate each of said two axes of freedom, therefore allowing to modify the tilting of the third axle with respect to the first module.

According to an alternative embodiment of the present invention, the omnidirectional platform, includes the following features which are already known in the state of the art:
- a first module that defines a rotation centre of the omnidirectional platform wherein a coordinate origin is located provided with an X axis, a Y axis and a Z axis orthogonal to each other, said first module being provided with, at least, a first drive wheel connected to a first horizontal axle parallel to the X axis and a second drive wheel connected to a second horizontal axle, both first and second axles being coplanar with the same plane parallel to the Z axis, said plane being separated a distance D from the Z axis, the first drive wheel being driven by means of a first actuator, and the second drive wheel being driven by means of a second actuator;
- a second module completely supported on the first module and connected thereto by means of a third vertical axle coaxial con the Z axis, the relative rotation of the second module and of the first module being driven by a third actuator, said second module defining a loading platform;
- a control device connected to the first, second and third actuators to control their coordinated actuation configured to obtain an omnidirectional displacement of the platform by means of a precise control of the displacement of the rotation centre, obtained by means of the actuation of the first and second actuators, and by means of a precise control of the orientation of the second module by means of the precise actuation of the third actuator;
- the first module also includes a free rotating rolling element, the contact points with the ground of the first drive wheel, of the second drive wheel and of the free rotating rolling element defining a supporting plane on the ground;
wherein the rotation centre is arranged in an area of the first module comprised between the first drive wheel, the second drive wheel and the free rotating rolling element.

The proposed alternative embodiment of the omnidirectional platform also includes, in a novel way, the following characteristics:
- the connection between the first module and the second module through the third axle includes a levelling device with two axes of freedom configured to automatically keep the second module in a horizontal position independently of the tilting of the first module.

The following additional features can also be included:
the omnidirectional platform includes a lifting device that allows to modify the distance of the wheels relative to the first module or relative to the second module.
the second module is supported on the first module, and also on at least another module of identical characteristics as the first module, the control device of the first module and of the other module, which is at least one, being shared and said control device being configured to coordinate the actuation of the first module and of the other module, which is at least one.

A second aspect described on this document, which does not form part of the present claimed invention, concerns to an omnidirectional platform intended for being a static platform intended to support loads on its wheels, facing upwards, and for transferring said loads in any horizontal direction, allowing an omnidirectional transport of the loads within the action-radius of the static omnidirectional transporter.

The proposed omnidirectional transporter comprises, as well as the omnidirectional platform described in connection with the first aspect of the invention:
- a first module that defines a rotation centre of the omnidirectional platform wherein a coordinate origin is located provided with an X axis, a Y axis and a Z axis orthogonal to each other, said first module being provided with:
- at least a first drive wheel connected to a first horizontal axle parallel to the X axis and a second drive wheel connected to a second horizontal axle, both first and second axles being coplanar with the same plane parallel to the Z axis, said plane being separated a distance D from the Z axis, the first drive wheel being actuated by means of a first actuator, and the second drive wheel being actuated by means of a second actuator;

- a second horizontal module connected to said first module by means of a third vertical axle coaxial with the Z axis, the relative rotation of the second module and of the first module being actuated by means of a third actuator;
- a control device connected to the first, second and third actuators to control their coordinated actuation.

The proposed transporter also includes the following characteristics
- the second module is attached to a support, and the first module being supported on the second module;
- the first module also includes at least one free rotating rolling element, the first drive wheel, the second drive wheel and the free rotating rolling element defining a load transporting plane above the transporter;
- the control device is configured to obtain an omnidirectional displacement of a load supported on the load transporting plane on said first drive wheel, second drive when and the at least one free rotating wheel, by means of a precise control of the steering of the first module by means of the precise actuation of the third actuator, and by means of a precise control of the actuation of the first and second drive wheels.

Therefore, this second aspect of the invention is then equivalent to the omnidirectional platform described in the first aspect of the invention but placed upside down, the second module being attached to the support and the first module being supported on top of the second module, i.e., oppositely to the first aspect of the invention. Therefore, the actuation of the drive wheels does not produce the displacement of the assembly, since this is fixed to a support and the wheels lack traction with the ground.

In the omnidirectional transporter, the first and second wheels, as well as the rolling element, will be facing upwards and will offer a transporting plane above the transporter, intended for supporting loads placed on it and for transferring said loads towards any horizontal direction by means of the precise control of the first, second and third actuators by the control device.

Preferably, said first, second and third actuators will be motors, for example electric motors or servomotors, with an electronic control.

Therefore, a package placed on the transporting plane and supported on the first and second drive wheels and the rolling element may be steered and driven in any horizontal direction by means of the actuation and the control of the first, second and third actuators by the control device. Evidently, it is contemplated that around the omnidirectional transporter some type of receiving surface, coplanar to the transporting plane, be arranged to receive said package when it abandons the first and second drive wheels. The receiving surface may be a table, an assembly of conveyor belts, a surface with omnidirectional spheres, etc.

According to an additional embodiment, the rolling element will be a third free rotating single or double wheel around a fourth horizontal axle, said third self-steerable wheel, by means of a fifth vertical axle, being vertically parallel to the Z axis relative to the centre of the third wheel, said fifth axle being freely linked relative to the first module by means of a bearing.

Preferably, the rotation centre will be arranged in an area of the first module comprised between the first drive wheel, the second drive wheel and the at least one free rotating wheel. This allows for the rotation of the first module to produce a rotation of the package supported on the transporting plane on itself, reducing the space necessary for the movement of the package.

It is also contemplated that the control device be shared with a plurality of omnidirectional transporters adjacent to the same load transporting plane, said control device being configured to coordinate the actuation of the first, second and third actuators of the omnidirectional transporter with the actuation of the first, second and third actuator of the adjacent transporters, allowing the omnidirectional transport of loads on a load transporting plane, transferring said loads of the omnidirectional transporter to another adjacent omnidirectional transporter.

With a view to aiding the loading and unloading of goods and of other elements on the second module, it is proposed that this includes elements selected amongst:
- a roller transporter;
- a motorized roller transporter;
- a conveyor belt;
- a motorised conveyor belt;
- a towing coupler;
- forklifts projecting from a side of the second module and a counterweight located in an opposite side of the second module or centred in the second module or centred in the first module;
- forklifts projecting from a side of the second module and a counterweight located in an opposite side of the second module and automatically displaceable to increase or reduce its horizontal distance relative to said forklifts.

The automatically displaceable counterweight allows to compensate for any weight that is loaded on the forklift, thus maintaining the second module balanced on the first module.

The counterweight centred in the first or in the second module increases the weight of the omnidirectional platform and, therefore, allows supporting greater weights in its periphery without tipping over.

The towing coupler will allow to automatically hook and unhook a trolley to allow for its towing by the omnidirectional platform.

It will be understood that the references to geometric positions, such as, for example, parallel, perpendicular, tangential, etc. admit deviations of up to ±5º relative to the theoretical position defined by said terminology.

Other characteristics of the invention will appear in the following detailed description of an exemplary embodiment.

### Brief Description of the Figures

The above and other advantages and characteristics will be more completely understood from the following detailed description of an exemplary embodiment with reference to the attached drawings, which must be taken by way of illustration and not limitation, wherein:
Fig. 1 shows a bottom view of the proposed omnidirectional platform according to a first embodiment wherein the rolling element is a third free rotating and self-steerable double wheel, and wherein the omnidirectional platform lacks a suspension device;
Fig. 2 shows a cross section of the omnidirectional platform shown in Fig. 1;
in Fig. 3 there is shown an omnidirectional platform shown in Fig. 1 in an initial position of a lateral translation displacement in the direction of the X axis indicated with a straight arrow, the same omnidirectional platform in a final position of said displacement shown in phantom lines, as well as the paths which the first drive wheel, the second drive wheel and the third free rotating wheel must follow from the initial position to the final position so as to achieve the rotation centre of the omnidirectional platform to move in a straight line achieving a lateral translation;
Fig. 4 shows a cross-sectional section of an omnidirectional platform according to another embodiment provided with a suspension device which integrates elastomeric material blocks;
Fig. 5 shows an alternative embodiment similar to the one shown in Fig. 4 but with a second module of greater size supported on the first module and also on another module;
Fig. 6 shows a bottom view of the omnidirectional platform according to an embodiment wherein the rolling element consists of two self-steerable wheels attached to a chassis which is itself attached to the rest of the first module by means of a horizontal linkage;
Fig. 7 shows a similar view to the one shown in Fig. 2 but according to an embodiment wherein the omnidirectional platform is provided with a suspension device based on an arm hinged to the first module in a first end and attached to a drive wheel in the second end, allowing it to swing in limited manner by means of an elastic element which connects the arm with the first module, said elastic element being a pneumatic piston in this embodiment;
Fig. 8 shows a similar view to the one shown in Fig. 2 but according to an embodiment wherein the omnidirectional platform is provided with a lifting device in the shape of a scissoring mechanism interposed between two surfaces integrated in the second module;
Fig. 9 shows a similar view to the one shown in Fig. 2 but according to an embodiment wherein the omnidirectional platform is provided with a levelling device that allows to maintain the second module horizontal even if the first module is not supported on a horizontal ground, in this example by means of two automatically actuated linkages facing in perpendicular directions parallel to the X and Y axes; this embodiment also includes a lifting device in the shape of a third telescopic axle;
Fig. 10 shows a similar view to the one shown in Fig. 2 but according to an embodiment wherein the omnidirectional platform is provided with forklifts projecting from a side of the second module, allowing for the transport of loaded pallets by means of the omnidirectional platform, in this embodiment also including a displaceable counterweight in the shape of a roller attached to arms hinged to the second module, which allow to move the counterweight away or closer to the forklifts in order to balance a possible load supported on said forklifts;
Fig. 11, which does not form part of the present claimed invention, shows a cross section of the proposed omnidirectional transporter relative to the second aspect of the invention, the first and second wheels being driven, as well as the rolling element in the shape of free rotating double wheels, facing upwardly defining a transporting plane, which in this exemplary embodiment is coplanar with spherical bearings arranged around it as a transporting surface.

### Detailed Description of an Exemplary Embodiment

The attached figures show exemplary embodiments with a non-limiting, illustrative character of the present invention.

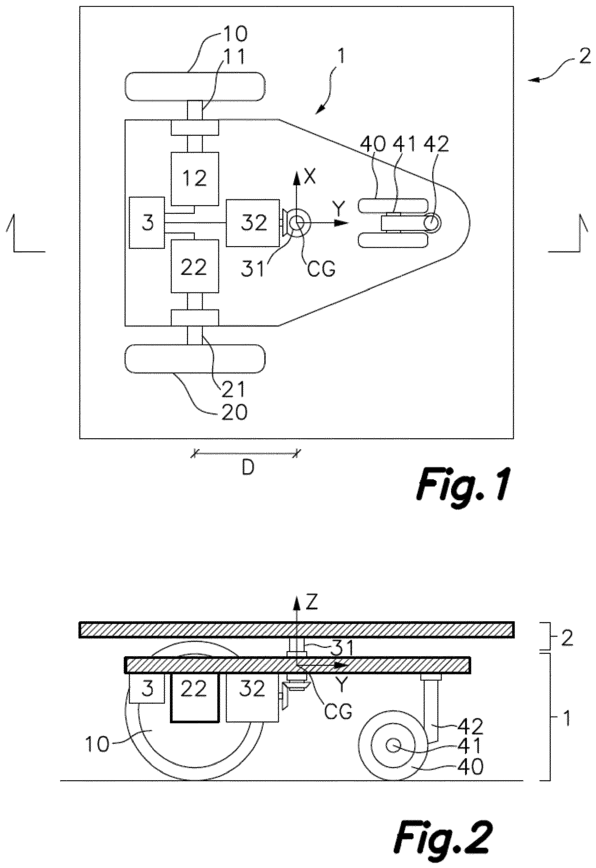

Figs. 1 and 2 show an omnidirectional platform according to a first embodiment that is provided with a first module 1 that includes a rotation centre CG that defines a coordinate axis of three orthogonal axes X, Y and Z.

On top of the first module 1, in the shape of a flat platform of approximately triangular geometry, a second module 2 in the shape of a flat rectangular platform intended for transporting goods is supported. Both first and second modules 1 and 2 are connected through a third axle 31 coaxial with the vertical Z axis arranged in a central area of the first module 1 and in the geometric centre of the second module 2, allowing for the relative rotation of both first and second modules 1 and 2 around the third axle 31 driven by means of a third actuator 32 connected to said third axle 31.

The first module 1 is provided with a first drive wheel 10 connected to a first axle 11 driven by means of a first actuator 12, and with a second drive wheel 20 connected to a second axle 21 driven by means of a second actuator 22, both first and second drive wheels 10 and 20 being of equal size in this exemplary embodiment, and being mutually opposed and coaxial, the first and second axles 11 and 21 being parallel to the X axis but being separated a distance D from it in the direction of the Y axis. This distance D makes it possible for the controlled and independent actuation of the first and the second actuators 12 and 22 to allow a displacement of the rotation centre CG in any horizontal direction, the first and second drive wheels 10 and 20 being supported on the ground.

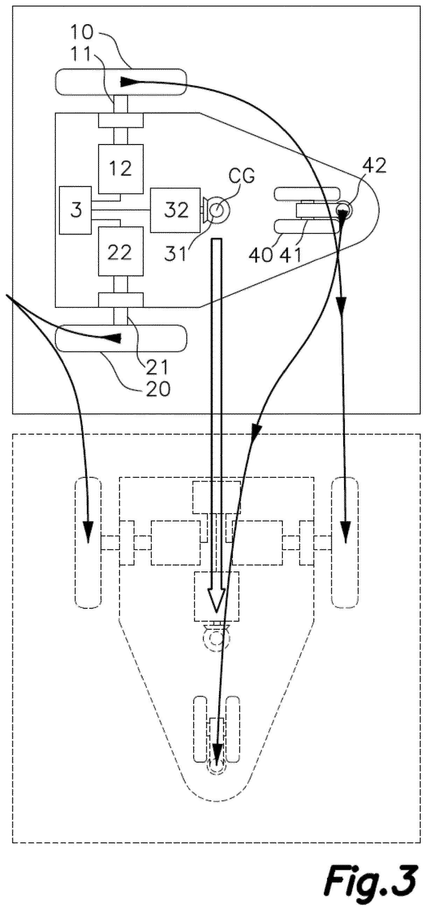

An example of said omnidirectional displacement of the platform is shown in Fig. 3 wherein the omnidirectional platform appears in an initial position and, in phantom lines, in a final position. In this figure, the approximate path is indicated by arrows that each one of the first drive wheel 10, the second drive wheel 20 and the rolling element 40 must follow to achieve a lateral rectilinear displacement (in the direction of the X axis in the initial position). As can be seen in this figure, the path of the first and second drive wheels 10 and 20 must be precisely coordinated to obtain said lateral rectilinear displacement. In this example, the second drive wheel 20 must even change its rotation direction to achieve the desired movement of the rotation centre CG. Additionally, the displacement of the first module 1 produces a rotation thereof, so that the second module must constantly correct its angular position relative to the first module 1 so as to counteract said rotation and remain in the same orientation, thus achieving its lateral translation. Said relative rotation is achieved with the actuation of the third actuator 32 connected to the third axle 31.

A control device 3 controls the first, second and third actuators 12, 22 and 32 which, in this example, are electric servomotors in order to co-ordinately obtain an omnidirectional displacement of the omnidirectional platform. Said control device 3 is a programmable logic controller provided with memory and calculation capacity, and is programmed to execute algorithms that determine the precise actuation of the first, second and third actuators 12, 22, 32 necessary to obtain a controlled displacement of the rotation centre CG of the omnidirectional platform. Said algorithms will take into account the wheel diameter and their distance D relative to the rotation centre CG of the first module 1, amongst other factors.

To provide stability to the first module 1 a third free rotating wheel 40 is arranged as a rolling element 40. Said third wheel 40 freely rotates around a fourth horizontal axle 41, and can self-steer in any horizontal direction relative to the first module 1 thanks to its being attached thereto by means of a fifth vertical axle 42 parallel to the Z axis and shifted relative to the centre of the free rotating third wheel 40.

The third free rotating wheel 40 may be a single wheel or a double wheel.

The assembly of the first, second drive wheels 10 and 20 and of the third free rotating wheel 40 guarantees the complete stability of the assembly and guarantees permanent contact of all the wheels with the ground, even on rough terrains.

Wheels 10, 20 and 40 are also provided with a tyre composed of a rubber coating or another similar elastomeric material.

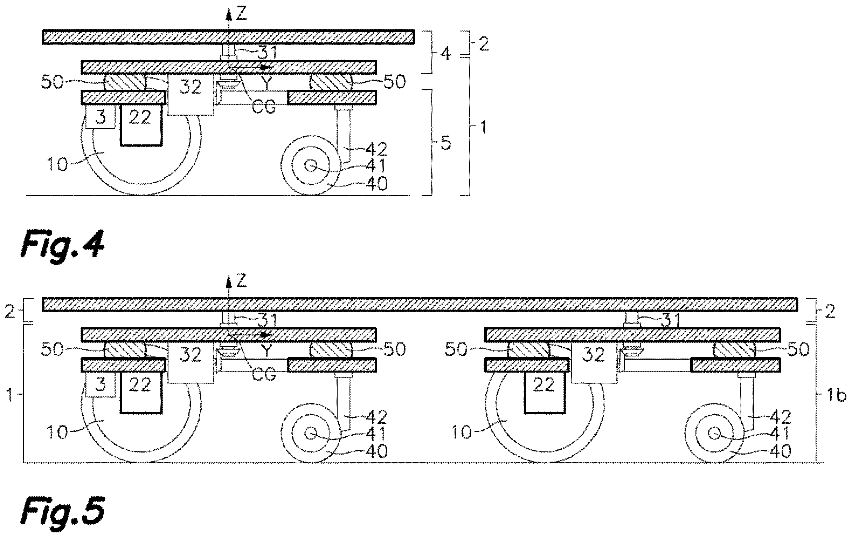

According to another embodiment shown in Fig. 4, the omnidirectional platform also includes a suspension device 50 that prevents the transmission of vibrations from the wheels to the second module 2.

In this example, the first module 1 is provided with a segment 5 that integrates the first drive wheel 10, the second drive wheel 20 and the third free rotating wheel 40, as well as the first and second actuators 12 and 22. A second segment 4 is independent from the other previously described segment 5 and integrates the third actuator 32 and the third vertical axle 31 that is connected to the second module 2. Between both segments 4 and 5 a number of elastomeric material blocks are arranged as a suspension device 50 that dampen the transmission of vibrations between the first module 1 and the second module 2, thus avoiding that potential potholes or irregularities of the ground on which the first module 1 rolls be directly transmitted to the second module 2.

Obviously, said elastomeric material blocks may be substituted for springs, pistons or another equivalent damping system.

Of course, it will be understood that other embodiments may be contemplated wherein a segment 5 only supports one of the first drive wheel 10, the second drive wheel 20, together with its corresponding first or second actuator device 12 and 22, another independent segment 4 constituting the rest of the omnidirectional platform, the elastomeric material block, or the equivalent suspension device 50, being between both segments 4 and 5. In this example, a platform may include several suspension devices 50, one for every drive wheel 10 and 20 and one for the rolling element 40, for example.

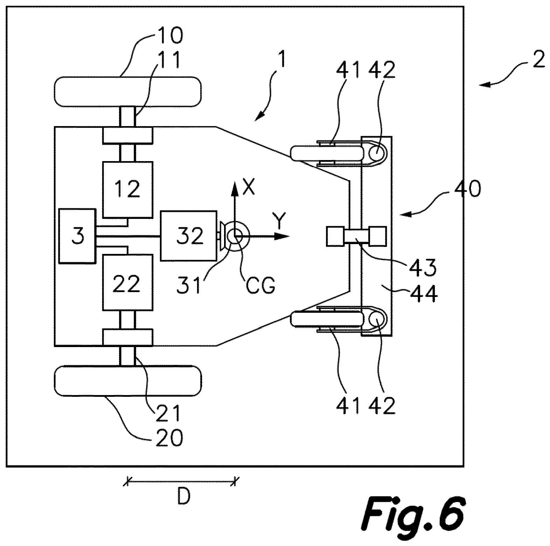

Fig. 6 shows an alternative embodiment of the rolling element. According to this embodiment, said rolling element consists of two self-steerable wheels connected to the first module 1 by means of a suspension device 50. This allows that each one of said two self-steerable wheels may adapt their position to rough terrain, thus achieving to ensure and maintain a permanent contact of the drive wheels with the ground, ensuring an omnidirectional displacement of the platform.

According to the example shown in Fig. 6, this embodiment provided with two self-steerable wheels consists of a chassis 44 to which both self-steerable wheels are attached. Said chassis 44 is connected, in turn, to the first module 1 by means of a horizontal linkage 43 parallel to the Y axis which functions as a suspension device 50. This horizontal linkage 43 allows the chassis 44 to swing relative to the first module 1 and, therefore, that the two self-steerable wheels adapt their position based on the irregularities of the terrain on which the omnidirectional platform rolls, ensuring the permanent contact both of the two self-steerable wheels and of the two drive wheels 10 and 20 with the terrain.

It will be understood that, alternatively, both self-steerable wheels may be independent from each other and each be attached to the first module 1 through a dedicated and self-contained suspension device 50, not requiring, therefore, said shared chassis 44.

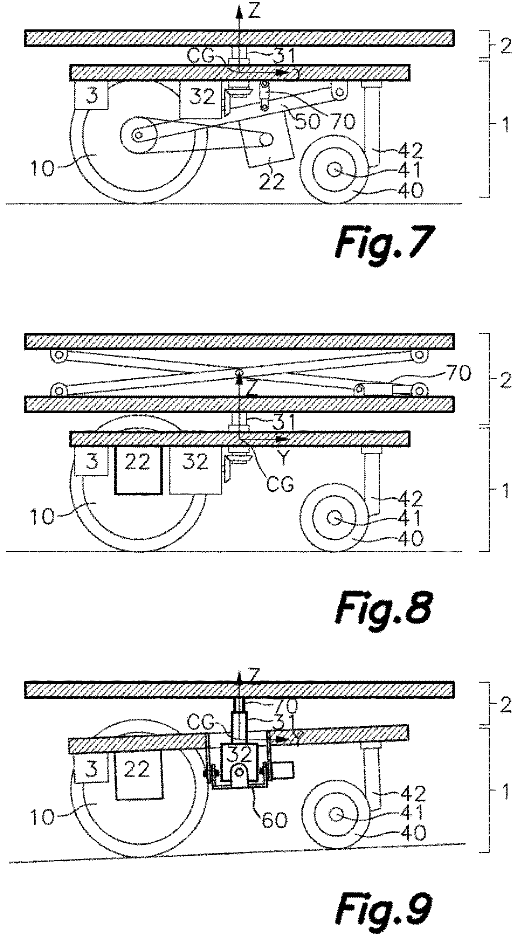

In Figs. 7, 6 and 9 different embodiments of the suspension device 50, of the lifting device 70 and of the levelling device 60 are proposed.

In Fig. 7, a suspension device 50 based on an arm hinged relative to the first module 1 in a first end and attached to a drive wheel 10 in a second end is shown, thus allowing the vertical displacement of said drive wheel 10. In this embodiment, a pneumatic piston connects the arm with the first module 1, functioning as an elastic damping and limiting element of the displacement of the arm. By modifying the inner air pressure of the pneumatic piston, for example by means of a compressed air system originating from a compression or from a compressed air cylinder, the separation of the wheels relative to the first module may be regulated, so that said piston and compressed air supply system will act as a lifting device 70.

In Fig. 8, an embodiment is proposed according to which the second module 2 is provided with a lifting device 70 formed by a scissoring mechanism that allows to move away or closer two parallel platforms integrating the second module 2.

Fig. 9 shows an embodiment of the levelling device 60 consisting in a cross support provided in its ends with two pairs of linkages perpendicular to each other, parallel to the X and Y axes, and actuated by means of motors controlled by the control device 3, the third actuator 32 and the third axle 31 being supported on said cross support.

In this embodiment, it is also proposed that the third axle 31 be telescopic, allowing to function as a lifting device 70.

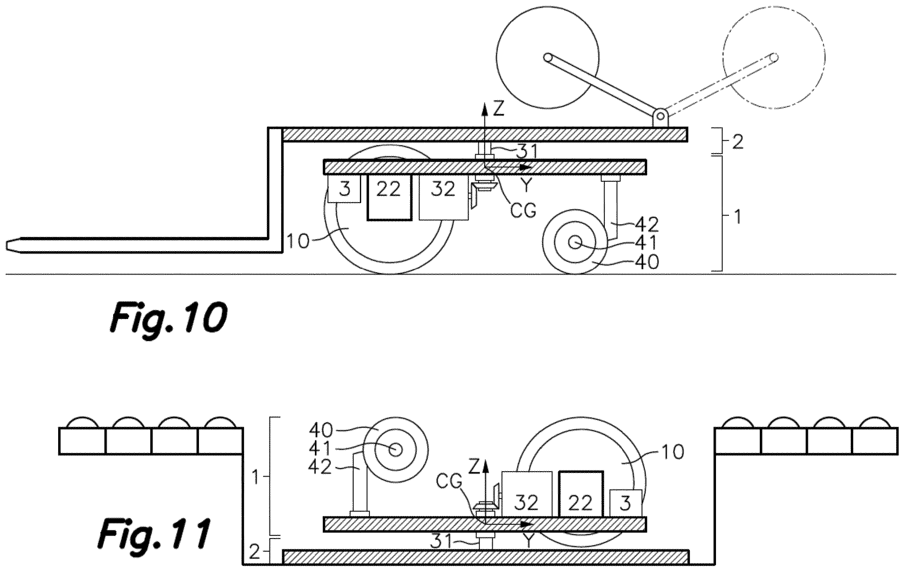

Fig. 10 shows an embodiment of supplements that could complement the proposed omnidirectional platform, forklifts that laterally project from one side of the second module 2 in this case, combined with a counterweight located on an opposite side of the second module 2. Said counterweight consists of a dense material cylinder attached to the end of a swinging arm that allows to move closer or away said counterweight from the centre of the second module 2 and from the forklifts, balancing a potential load.

Fig. 11, which does not form part of the present claimed invention, shows an exemplary embodiment relative to a second aspect of the present invention relative to an omnidirectional transporter intended for the transport and steering of packages. Said transporter is identical to the omnidirectional platform shown in Fig. 1, but it is arranged upside down with the second module attached to a support and, therefore, impeding its displacement. In this case, the first module 1 and the first and second drive wheels 10 and 20 remain above the second module 2, said drive wheels 10 and 20, together with the rolling element 40, defining a transporting plane. A package of greater size than the existing distance between the wheels and the rolling element may be placed, therefore, on the transporting plane, supported on the drive wheels 10 and 20 and the rolling element 40. The coordinated actuation of the first, second and third actuator devices 12, 22 and 32 will allow to rotate and displace said package in any horizontal direction and drive it out of the actuating area of the omnidirectional transporter in any direction. It is recommended that a table be arranged around said transporter coplanar with the transporting plane, preferably a low friction table with spherical rolling elements or with conveyor belts.

## Claims

1. An omnidirectional platform comprising:
a first module (1) that defines a rotation centre (CG) of the omnidirectional platform, wherein a coordinate origin is located provided with an X axis, a Y axis and a Z axis orthogonal to each other, said first module (1) being provided with:
• at least a first drive wheel (10) connected to a first horizontal axle (11) parallel to the X axis and a second drive wheel (20) connected to a second horizontal axle (21), both first and second axles (11, 21) being coplanar to the same plane parallel to the Z axis, said plane being separated a distance D from the Z axis, the first drive wheel (10) being driven by means of a first actuator (12), and the second drive wheel (20) being driven by means of a second actuator (22);
• a second module (2) completely supported on the first module (1) and connected thereto by means of a third vertical axle (31) coaxial to the Z axis, the relative rotation of the second module (2) and of the first module (1) being driven by means of a third actuator (32);
• a control device (3) connected to the first, second and third actuators (12, 22, 32) to control their coordinated drive configured to obtain an omnidirectional displacement of the platform by means of a precise control of the displacement of the rotation centre (CG), obtained by means of the actuation of the first and second actuators (12, 22), and by means of a precise control of the orientation of the second module (2) by means of the precise actuation of the third actuator (32);
• a free rotating rolling element (40), the points of contact with the ground of the first drive wheel (10), of the second drive wheel (20) and of the free rotating rolling element (40) defining a support plane on the ground;
wherein the rotation centre (CG) is arranged in an area of the first module (1) comprised between the first drive wheel (10), the second drive wheel (20) and the free rotating rolling element (40);
**characterized in that** the connection between the first module (1) and the second module (2) through the third axle (31) includes a levelling device (60) with two axes of freedom configured to automatically keep the second module (2) in a horizontal position independently of the tilting of the first module (1).

2. An omnidirectional platform according to claim 1, wherein the rolling element (40) is a third free rotating single or double wheel (40) around a fourth horizontal axle (41), said third wheel (40) being self-steerable by means of a fifth vertical axle (42) parallel to the Z axis misaligned relative to the centre of the third wheel (40), said fifth axle (42) being freely connected relative to the first module (1) by means of a bearing.

3. An omnidirectional platform according to claim 2, wherein the first wheel (10), the second wheel (20) and/or the third wheel (40) include tyres.

4. An omnidirectional platform according to claim 1, 2 or 3, wherein at least one suspension device (50) is interposed between the second module (2) and any of the first drive wheel (10), the second drive wheel (20) and the rolling element (40).

5. An omnidirectional platform according to claim 4, wherein said at least one suspension device (50) is selected amongst:
• an elastomeric material block connecting two platform-independent segments (4, 5), one segment integrating at least the second module (2) and the other segment integrating at least the first wheel (10), the second wheel (20) or the rolling element (40);
• springs or coils that connect mutually hinged platform-independent segments (4, 5), one segment (4) integrating at least the second module (2) and the other segment (5) integrating at least the first wheel (10), the second wheel (20) or the rolling element (40); or
• an arm with a first end hinged to the first module (1) and a second end connected to the first wheel (10), to the second wheel (20) or to the rolling element (40), said arm being attached to the first module (1) by means of an elastic element.

6. An omnidirectional platform according to claim 4, wherein the suspension device (50) is an arm with a first end hinged to the first module (1) and a second end connected to the first wheel (10), to the second wheel (20) or to the rolling element (40), said arm being attached to the first module (1) by means of an elastic element, and wherein said arm includes an angular position sensor that measures the precise angular position of the arm at all times and transmits this information to the control device, which is configured to adjust the drive calculations of each wheel based on the precise position of the arm detected by said sensor.

7. An omnidirectional platform according to any of the previous claims, wherein the omnidirectional platform includes a lifting device (70) that allows to modify the distance of the wheels (10, 20) relative to the first module (1) or relative to the second module (2).

8. An omnidirectional platform according to any of the previous claims, wherein a position detector connected to the control device (3) is also included, configured to determine the relative position of the platform relative to a number of fixed reference points external to said platform, said control device (3) being configured to verify if an actual position detected by means of said position detector matches an estimated position calculated by the control device (3) from the displacement of the platform commanded from said control device (3), detecting deviations of the platform, and the control device (3) being configured to command the corrective displacement of the platform position based on the detected deviations.

9. An omnidirectional platform according to any of the previous claims, wherein a communication device is also included connected to the control device (3) that allows for the transmission and reception of data and/or control commands, the control device (3) being configured to communicate with other proximal omnidirectional platforms and to coordinate its displacement with the displacement of said proximal omnidirectional platforms.

10. An omnidirectional platform according to any of the previous claims, wherein the third axle (31) is placed in the geometric centre of the second module (2).

11. An omnidirectional platform according to any of the previous claim, wherein the second module (2) is supported on the first module (1), and also on at least another module (1b) of identical characteristics as the first module (1), the control device (3) of the first module (1) and of the other module (1b), which is at least one, being shared and said control device (3) being configured to coordinate the actuation of the first module (1) and of the other module (1b), which is at least one.

12. An omnidirectional platform according to claim 1, wherein said rolling element (40) consists of two self-steerable wheels connected to the first module (1) by means of a suspension device (50).

13. An omnidirectional platform according to any of the previous claims, wherein the second module (2) includes elements selected amongst:
• a roller transporter;
• a motorised roller transporter;
• a conveyor belt;
• a motorised conveyor belt;
• a towing coupler;
• forklifts projecting from a side of the second module and a counterweight located in an opposite side of the second module, or centred in the second module or centred in the first module;
• forklifts projecting from a side of the second module and a counterweight located in an opposite side of the second module and automatically displaceable to increase or reduce its horizontal distance relative to said forklifts.

14. An omnidirectional platform comprising:
a first module (1) that defines a rotation centre (CG) of the omnidirectional platform, wherein a coordinate origin is located provided with an X axis, a Y axis and a Z axis orthogonal to each other, said first module (1) being provided with:
• at least a first drive wheel (10) connected to a first horizontal axle (11) parallel to the X axis and a second drive wheel (20) connected to a second horizontal axle (21), both first and second axles (11, 21) being coplanar to the same plane parallel to the Z axis, said plane being separated a distance D from the Z axis, the first drive wheel (10) being driven by means of a first actuator (12), and the second drive wheel (20) being driven by means of a second actuator (22);
• a second module (2) completely supported on the first module (1) and connected thereto by means of a third vertical axle (31) coaxial to the Z axis, the relative rotation of the second module (2) and of the first module (1) being driven by means of a third actuator (32);
• a control device (3) connected to the first, second and third actuators (12, 22, 32) to control their coordinated drive configured to obtain an omnidirectional displacement of the platform by means of a precise control of the displacement of the rotation centre (CG), obtained by means of the actuation of the first and second actuators (12, 22), and by means of a precise control of the orientation of the second module (2) by means of the precise actuation of the third actuator (32);
• a free rotating rolling element (40), the points of contact with the ground of the first drive wheel (10), of the second drive wheel (20) and of the free rotating rolling element (40) defining a support plane on the ground;
wherein the rotation centre (CG) is arranged in an area of the first module (1) comprised between the first drive wheel (10), the second drive wheel (20) and the free rotating rolling element (40);
wherein at least one suspension device (50) is interposed between the second module (2) and any of the first drive wheel (10), the second drive wheel (20) and the rolling element (40);
**characterized in that**
the suspension device (50) is an arm with a first end hinged to the first module (1) and a second end connected to the first wheel (10), to the second wheel (20) or to the rolling element (40), said arm being attached to the first module (1) by means of an elastic element,
and wherein said arm includes an angular position sensor that measures the precise angular position of the arm at all times and transmits this information to the control device, which is configured to adjust the drive calculations of each wheel based on the precise position of the arm detected by said sensor.

## Patentansprüche

1. Omnidirektionale Plattform, umfassend:
ein erstes Modul (1) mit einem Rotationszentrum (CG) der omnidirektionalen Plattform, in dem ein Koordinatenursprung mit einer x-Achse, einer y-Achse und einer z-Achse, die orthogonal zueinander liegen, angeordnet ist, wobei das genannte erste Modul (1) Folgendes aufweist:
• mindestens ein erstes Antriebsrad (10), das mit einer ersten horizontalen Achse (11) parallel zur x-Achse verbunden ist, und ein zweites Antriebsrad (20), das mit einer zweiten horizontalen Achse (21) verbunden ist, wobei sowohl die erste als auch die zweite Achse (11, 21) koplanar in derselben parallel zur z-Achse verlaufenden Ebene liegen, wobei die genannte Ebene um einen Abstand D von der z-Achse entfernt ist, wobei das erste Antriebsrad (10) durch einen ersten Stelltrieb (12) und das zweite Antriebsrad (20) durch einen zweiten Stelltrieb (22) angetrieben wird;
• ein vollständig auf dem ersten Modul (1) aufliegendes zweites Modul (2), das mit diesem über eine zur z-Achse koaxialen vertikalen dritten Achse (31) verbunden ist, wobei die Drehung des zweiten Moduls (2) relativ zum ersten Modul (1) über einen dritten Stelltrieb (32) erfolgt;
• eine Steuervorrichtung (3), die zur Steuerung des koordinierten Antriebs des ersten, zweiten und dritten Stelltriebs (12, 22, 32) mit diesen verbunden ist und dazu ausgelegt ist, durch eine genaue Steuerung der Positionierung des Rotationszentrums (CG) mittels Ansteuerung des ersten und zweiten Stelltriebs (12, 22) und durch eine genaue Steuerung der Ausrichtung des zweiten Moduls (2) mittels der genauen Ansteuerung des dritten Stelltriebs (32) eine omnidirektionale Positionierung der Plattform zu erzielen;
• ein frei rotierendes Rollelement (40), wobei die Berührungspunkte des ersten Antriebsrads (10), des zweiten Antriebsrads (20) und des frei rotierenden Rollelements (40) mit dem Boden eine Auflageebene auf dem Boden bilden;
wobei das Rotationszentrum (CG) in einem Bereich des ersten Moduls (1) zwischen dem ersten Antriebsrad (10), dem zweiten Antriebsrad (20) und dem frei rotierenden Rollelement (40) angeordnet ist;
**dadurch gekennzeichnet, dass** die Verbindung zwischen dem ersten Modul (1) und dem zweiten Modul (2) durch die dritte Achse (31) eine Nivelliervorrichtung (60) mit zwei frei beweglichen Achsen enthält, die so ausgelegt ist, dass sie das zweite Modul (2) unabhängig von der Neigung des ersten Moduls (1) automatisch in einer horizontalen Position hält.

2. Omnidirektionale Plattform nach Anspruch 1, wobei das Rollelement (40) ein um eine horizontale vierte Achse (41) freidrehendes drittes Einzel- oder Doppelrad (40) ist, wobei das genannte dritte Rad (40) mittels einer zur z-Achse parallelen vertikalen fünften Achse (42), die gegenüber dem Mittelpunkt des dritten Rads (40) versetzt ist, selbstlenkend ist, wobei die genannte fünfte Achse (42) über ein Lager frei mit dem ersten Modul (1) verbunden ist.

3. Omnidirektionale Plattform nach Anspruch 2, wobei das erste Rad (10), das zweite Rad (20) und/oder das dritte Rad (40) bereift sind.

4. Omnidirektionale Plattform nach Anspruch 1, 2 oder 3, wobei zwischen dem zweiten Modul (2) und jeweils dem ersten Antriebsrad (10), dem zweiten Antriebsrad (20) und/oder dem Rollelement (40) mindestens eine Lagerungsvorrichtung (50) angeordnet ist.

5. Omnidirektionale Plattform nach Anspruch 4, wobei die genannte mindestens eine Lagerungsvorrichtung (50) ausgewählt ist aus:
• einem Block aus Elastomermaterial, der zwei plattformunabhängige Segmente (4, 5) verbindet, wobei ein Segment mindestens das zweite Modul (2), das andere Segment mindestens das erste Rad (10), das zweite Rad (20) oder das Rollelement (40) umfasst;
• Federn oder Spulen, die gelenkig miteinander verbundene, plattformunabhängige Segmente (4, 5) verbinden, wobei ein Segment (4) mindestens das zweite Modul (2), das andere Segment (5) mindestens das erste Rad (10), das zweite Rad (20) oder das Rollelement (40) umfasst; oder
• einem Arm mit einem mit dem ersten Modul (1) gelenkig verbundenen ersten Ende und einem mit dem ersten Rad (10), dem zweiten Rad (20) oder dem Rollelement (40) verbundenen zweiten Ende, wobei der genannte Arm über ein elastisches Element am ersten Modul (1) befestigt ist.

6. Omnidirektionale Plattform nach Anspruch 4, wobei die Lagerungsvorrichtung (50) ein Arm mit einem mit dem ersten Modul (1) gelenkig verbundenen ersten Ende und einem mit dem ersten Rad (10), dem zweiten Rad (20) oder dem Rollelement (40) verbundenen zweiten Ende ist, wobei der genannte Arm über ein elastisches Element am ersten Modul (1) befestigt ist und wobei der genannte Arm einen Winkelpositionssensor aufweist, der ständig die genaue Winkelposition des Arms misst und diese Information an die Steuervorrichtung überträgt, welche dazu ausgelegt ist, die Antriebsberechnungen der einzelnen Räder basierend auf der von dem genannten Sensor erfassten genauen Position des Arms anzupassen.

7. Omnidirektionale Plattform nach einem der vorstehenden Ansprüche, wobei die omnidirektionale Plattform eine Hebevorrichtung (70) aufweist, die es ermöglicht, den Abstand der Räder (10, 20) zum ersten Modul (1) oder zum zweiten Modul (2) zu ändern.

8. Omnidirektionale Plattform nach einem der vorstehenden Ansprüche, ferner umfassend einen mit der Steuervorrichtung (3) verbundenen Positionsgeber, der dazu ausgelegt ist, die Position der Plattform relativ zu einer Reihe fester Bezugspunkte außerhalb der genannten Plattform zu bestimmen, wobei die genannte Steuervorrichtung (3) dazu ausgelegt ist, zu überprüfen, ob eine mittels des genannten Positionsgebers erfasste tatsächliche Position mit einer von der Steuervorrichtung (3) aufgrund der von der genannten Steuervorrichtung (3) angewiesenen Plattformpositionierung berechneten Sollposition übereinstimmt, und Abweichungen der Plattform zu erfassen, und wobei die Steuervorrichtung (3) dazu ausgelegt ist, basierend auf den erfassten Abweichungen die berichtigende Änderung der Plattformposition zu befehlen.

9. Omnidirektionale Plattform nach einem der vorstehenden Ansprüche, ferner umfassend eine mit der Steuervorrichtung (3) verbundene Kommunikationsvorrichtung, die das Senden und Empfangen von Daten und/oder Steuerbefehlen ermöglicht, wobei die Steuervorrichtung (3) dazu ausgelegt ist, mit anderen benachbarten omnidirektionalen Plattformen zu kommunizieren und ihre Positionierung mit der Positionierung der genannten benachbarten omnidirektionalen Plattformen zu koordinieren.

10. Omnidirektionale Plattform nach einem der vorstehenden Ansprüche, wobei die dritte Achse (31) in der geometrischen Mitte des zweiten Moduls (2) angeordnet ist.

11. Omnidirektionale Plattform nach einem der vorstehenden Ansprüche, wobei das zweite Modul (2) auf dem ersten Modul (1) sowie auf mindestens einem weiteren Modul (1b) mit identischen Eigenschaften wie das erste Modul (1) aufliegt, wobei die Steuervorrichtung (3) des ersten Moduls (1) und des mindestens einen weiteren Moduls (1b) gemeinsam genutzt wird und die genannte Steuervorrichtung (3) dazu ausgelegt ist, die Ansteuerung des ersten Moduls (1) und des mindestens einen weiteren Moduls (1b) zu koordinieren.

12. Omnidirektionale Plattform nach Anspruch 1, wobei das genannte Rollelement (40) aus zwei selbstlenkenden Rädern besteht, die mittels einer Lagerungsvorrichtung (50) mit dem ersten Modul (1) verbunden sind.

13. Omnidirektionale Plattform nach einem der vorstehenden Ansprüche, wobei das zweite Modul (2) Elemente umfasst, die ausgewählt sind aus:
• einer Rollenbahn;
• einer motorisierten Rollenbahn;
• einem Förderband;
• einem motorisierten Förderband;
• einer Schleppkupplung;
• an einer Seite des zweiten Moduls hervorstehenden Hubgabeln und einem Gegengewicht, das sich an einer gegenüberliegenden Seite des zweiten Moduls oder mittig im zweiten Modul oder mittig im ersten Modul befindet;
• an einer Seite des zweiten Moduls hervorstehenden Hubgabeln und einem Gegengewicht, das sich an einer gegenüberliegenden Seite des zweiten Moduls befindet und zur Vergrößerung oder Verringerung seines Horizontalabstands zu den genannten Hubgabeln automatisch verfahrbar ist.

14. Omnidirektionale Plattform, umfassend:
ein erstes Modul (1) mit einem Rotationszentrum (CG) der omnidirektionalen Plattform, in dem ein Koordinatenursprung mit einer x-Achse, y-Achse und z-Achse, die orthogonal zueinander liegen, angeordnet ist, wobei das genannte erste Modul (1) Folgendes aufweist:
• mindestens ein erstes Antriebsrad (10), das mit einer ersten horizontalen Achse (11) parallel zur x-Achse verbunden ist, und ein zweites Antriebsrad (20), das mit einer zweiten horizontalen Achse (21) verbunden ist, wobei sowohl die erste als auch die zweite Achse (11, 21) koplanar in derselben parallel zur z-Achse verlaufenden Ebene liegen, wobei die genannte Ebene um einen Abstand D von der z-Achse entfernt ist, wobei das erste Antriebsrad (10) durch einen ersten Stelltrieb (12) und das zweite Antriebsrad (20) durch einen zweiten Stelltrieb (22) angetrieben wird;
• ein vollständig auf dem ersten Modul (1) aufliegendes zweites Modul (2), das mit diesem über eine zur z-Achse koaxialen vertikalen dritten Achse (31) verbunden ist, wobei die Drehung des zweiten Moduls (2) relativ zum ersten Modul (1) über einen dritten Stelltrieb (32) erfolgt;
• eine Steuervorrichtung (3), die zur Steuerung des koordinierten Antriebs des ersten, zweiten und dritten Stelltriebs (12, 22, 32) mit diesen verbunden ist und dazu ausgelegt ist, durch eine genaue Steuerung der Positionierung des Rotationszentrums (CG) mittels Ansteuerung des ersten und zweiten Stelltriebs (12, 22) und durch eine genaue Steuerung der Ausrichtung des zweiten Moduls (2) mittels der genauen Ansteuerung des dritten Stelltriebs (32) eine omnidirektionale Positionierung der Plattform zu erzielen;
• ein frei rotierendes Rollelement (40), wobei die Berührungspunkte des ersten Antriebsrads (10), des zweiten Antriebsrads (20) und des frei rotierenden Rollelements (40) mit dem Boden eine Auflageebene auf dem Boden bilden;
wobei das Rotationszentrum (CG) in einem Bereich des ersten Moduls (1) zwischen dem ersten Antriebsrad (10), dem zweiten Antriebsrad (20) und dem frei rotierenden Rollelement (40) angeordnet ist;
wobei zwischen dem zweiten Modul (2) und jeweils dem ersten Antriebsrad (10), dem zweiten Antriebsrad (20) und/oder dem Rollelement (40) mindestens eine Lagerungsvorrichtung (50) angeordnet ist; **dadurch gekennzeichnet, dass**
die Lagerungsvorrichtung (50) ein Arm mit einem mit dem ersten Modul (1) gelenkig verbundenen ersten Ende und einem mit dem ersten Rad (10), dem zweiten Rad (20) oder dem Rollelement (40) verbundenen zweiten Ende ist, wobei der genannte Arm über ein elastisches Element am ersten Modul (1) befestigt ist und wobei der genannte Arm einen Winkelpositionssensor aufweist, der ständig die genaue Winkelposition des Arms misst und diese Information an die Steuervorrichtung überträgt, welche dazu ausgelegt ist, die Antriebsberechnungen der einzelnen Räder basierend auf der von dem genannten Sensor erfassten genauen Position des Arms anzupassen.

## Revendications

1. Une plateforme omnidirectionnelle comportant :
un premier module (1) qui définit un centre de rotation (CG) de la plateforme omnidirectionnelle, où une origine des coordonnées est située pourvue d'un axe X, un axe Y et un axe Z orthogonaux entre eux, ce premier module (1) étant pourvu de :
• au moins une première roue motrice (10) connectée à un premier essieu horizontal (11) parallèle à l'axe X et une deuxième roue motrice (20) connectée à un deuxième essieu horizontal (21), les premier et deuxième essieux (11, 21) étant tous les deux coplanaires au même plan parallèle à l'axe Z, ce plan étant écarté à une distance D de l'axe Z, la première roue motrice (10) étant entraînée au moyen d'un premier actionneur (12) et la deuxième roue motrice (20) étant entraînée au moyen d'un deuxième actionneur (22) ;
• un deuxième module (2) complètement supporté sur le premier module (1) et connecté à celui-ci au moyen d'un troisième essieu vertical (31) coaxial a l'axe Z, la rotation relative du deuxième module (2) et du premier module (1) étant entraînée au moyen d'un troisième actionneur (32) ;
• un dispositif de contrôle (3) connecté aux premier, deuxième et troisième actionneurs (12, 22, 32) pour contrôler leur transmission coordonnée configurée pour obtenir un déplacement omnidirectionnel de la plateforme au moyen d'un contrôle précis du déplacement du centre de rotation (CG), obtenu au moyen de l'actionnement des premier et deuxième actionneurs (12, 22) et au moyen d'un contrôle précis de l'orientation du deuxième module (2) au moyen de l'actionnement précis du troisième actionneur (32) ;
• un élément roulant librement rotatif (40), les points de contact avec le sol de la première roue motrice (10), de la deuxième roue motrice (20) et l'élément roulant librement rotatif (40) définissant un plan de support sur le sol ;
où le centre de rotation (CG) est aménagé dans une région du premier module (1) comprise entre la première roue motrice (10), la deuxième roue motrice (20) et l'élément roulant librement rotatif (40) ;
**caractérisé en ce que** la connexion entre le premier module (1) et le deuxième module (2) à travers le troisième essieu (31) comprend un dispositif de nivellement (60) ayant deux axes de liberté configurés pour maintenir automatiquement le deuxième module (2) dans la position horizontale indépendamment du basculement du premier module (1).

2. Une plateforme omnidirectionnelle conformément à la revendication 1, où l'élément roulant (40) est une troisième roue (40), simple ou double, tournant librement autour d'un quatrième essieu horizontal (41), cette troisième roue (40) étant auto-orientable au moyen d'un cinquième essieu vertical (42) parallèle à l'axe Z désaligné par rapport au centre de la troisième roue (40), ce cinquième essieu (42) étant librement connecté par rapport au premier module (1) au moyen d'un palier.

3. Une plateforme omnidirectionnelle conformément à la revendication 2, où la première roue (10), la deuxième roue (20) et/ou la troisième roue (40) comprend des pneus.

4. Une plateforme omnidirectionnelle conformément à la revendication 1, 2 ou 3, où au moins un dispositif de suspension (50) est interposé entre le deuxième module (2) et une quelconque des première roue motrice (10), deuxième roue motrice (20) et l'élément roulant (40).

5. Une plateforme omnidirectionnelle conformément à la revendication 4, où cette au moins un dispositif de suspension (50) est sélectionné parmi :
• un bloc de matériau élastomère connectant deux segments indépendants de plateforme (4,5), un segment intégrant au moins le deuxième module (2) et l'autre segment intégrant au moins la première roue (10), la deuxième roue (20) ou l'élément roulant (40),
• des ressorts ou des bobines qui connectent des segments indépendants de plateforme articulés (4, 5) entre eux, un segment (4) intégrant au moins le deuxième module (2) et l'autre segment (5) intégrant au moins la première roue (10), la deuxième roue (20) ou l'élément roulant (40) ; ou
• un bras ayant une première extrémité articulée au premier module (1) et une deuxième extrémité connectée à la première roue (10), à la deuxième roue (20) ou à l'élément roulant (40), ce bras étant attaché au premier module (1) au moyen d'un élément élastique.

6. Une plateforme omnidirectionnelle conformément à la revendication 4, où le dispositif de suspension (50) est un bras ayant une première extrémité articulée au premier module (1) et une deuxième extrémité connectée à la première roue (10), à la deuxième roue (20) ou à l'élément roulant (40), ce bras étant attaché au premier module (1) au moyen d'un élément élastique et où ce bras comprend un capteur de position angulaire qui mesure la position angulaire précise du bras à tout moment et transmet ces informations au dispositif de contrôle, qui est configuré pour ajuster les calculs de transmission de chaque roue basé sur la position précise du bras détectée par ce capteur.

7. Une plateforme omnidirectionnelle conformément à une quelconque des revendications précédentes, où la plateforme omnidirectionnelle comprend un dispositif de levage (70) qui permet de modifier la distance des roues (10,20) par rapport au premier module (1) ou par rapport au deuxième module (2).

8. Une plateforme omnidirectionnelle conformément à une quelconque des revendications précédentes, où un détecteur de position connecté au dispositif de contrôle (3) est également compris, configuré pour déterminer la position relative de la plateforme par rapport à un nombre de points de repère fixes externes à cette plateforme , ce dispositif de contrôle (3) étant configuré pour vérifier si un position effective détectée au moyen de ce détecteur de position correspond à une position estimée calculée par le dispositif de contrôle (3), à partir du déplacement de la plateforme commandé depuis ce dispositif de contrôle (3) détectant des déviations de la plateforme et le dispositif de contrôle (3) étant configuré pour commander le déplacement de correction de la position de la plateforme basé sur les déviations détectées.

9. Une plateforme omnidirectionnelle conformément à une quelconque des revendications précédentes, où un dispositif de communication est également compris connecté au dispositif de contrôle (3) qui permet la transmission et la réception de données et/ou de commandes de contrôle, le dispositif de contrôle (3) étant configuré pour communiquer avec d'autres plateformes omnidirectionnelles proximales et pour coordonner son déplacement avec le déplacement de ces plateformes omnidirectionnelles proximales.

10. Une plateforme omnidirectionnelle conformément à une quelconque des revendications précédentes, où le troisième essieu (31) est placé au centre géométrique du deuxième module (2).

11. Une plateforme omnidirectionnelle conformément à une quelconque des revendications précédentes, où le deuxième module (2) est supporté sur le premier module (1) et également sur au moins un autre module (1b) ayant des caractéristiques identiques à celles du premier module (1), le dispositif de contrôle (3) du premier module (1) et l'autre module (1b) qui est au moins un, qui sont partagés et ce dispositif de contrôle (3) étant configuré pour coordonner l'actionnement du premier module (1) et de l'autre module (1b), qui est au moins un.

12. Une plateforme omnidirectionnelle conformément à la revendication 1, où cet élément roulant (40) consiste en deux roues auto-orientables connectées au premier module (1) au moyen d'un dispositif de suspension (50).

13. Une plateforme omnidirectionnelle conformément à une quelconque des revendications précédentes, où le deuxième module (2) comprend des éléments sélectionnés parmi :
• un transporteur à rouleaux ;
• un transporteur à rouleaux motorisé ;
• une bande transporteuse ;
• une bande transporteuse motorisée ;
• un attelage de remorque ;
• des chariots élévateurs se projetant à partir d'un côté du deuxième module et un contrepoids situé sur un côté opposé du deuxième module ou centré dans le deuxième module ou centré dans le premier module ;
• des chariots élévateurs se projetant à partir d'un côté du deuxième module et un contrepoids situé sur un côté opposé du deuxième module et automatiquement déplaçable pour augmenter ou diminuer sa distance horizontale par rapport à ces chariots élévateurs.

14. Une plateforme omnidirectionnelle comportant :
un premier module (1) qui définit un centre de rotation (CG) de la plateforme omnidirectionnelle, où lune origine des coordonnées est située ayant un axe X, un axe Y et un axe Z orthogonaux entre eux, ce premier module (1) étant pourvue de :
• au moins une première roue motrice (10) connectée à un premier essieu horizontal (11) parallèle à l'axe X et une deuxième roue motrice (20) connectée à un deuxième essieu horizontal (21), les premier et deuxième essieux (11,21) étant tous les deux coplanaires au même plan parallèle à l'axe Z, ce plan étant écarté à une distance D de l'axe Z, la première roue motrice (10) étant entraînée au moyen d'un premier actionneur (12) et la deuxième roue motrice (20) étant entraînée au moyen d'un deuxième actionneur (22) ;
• un deuxième module (2) complètement supporté sur le premier module (1) et connecté à celui-ci au moyen d'un troisième essieu vertical (31) coaxial à l'axe Z, la rotation relative du deuxième module (2) et du premier module (1) étant entraînée au moyen d'un troisième actionneur (32) ;
• un dispositif de contrôle (3) connecté aux premier, deuxième et troisième actionneurs (12, 22, 32) pour contrôler leur transmission coordonnée configuré pour obtenir un déplacement omnidirectionnel de la plateforme au moyen d'un contrôle précis du déplacement du centre de rotation (CG), obtenu au moyen de l'actionnement des premier et deuxième actionneurs (12, 22) et au moyen d'un contrôle précis de l'orientation du deuxième module (2) au moyen de l'actionnement précis du troisième actionneur (32) ;
• un élément roulant librement rotatif (40), les points de contact sur le sol de la première roue motrice (10), de la deuxième roue motrice (20) et de l'élément roulant librement rotatif (40) définissant un plan de support sur le sol ;
où le centre de rotation (CG) est aménagé dans une région du premier module (1) comprise entre la première roue motrice (10), la deuxième roue motrice (20) et l'élément roulant librement rotatif (40) ;
où au moins un dispositif de suspension (50) est interposé entre le deuxième module (2) et une quelconque des première roue motrice (10), deuxième roue motrice (20) et l'élément roulant (40) ;
**caractérisé en ce que**
le dispositif de suspension (50) est un bras ayant une première extrémité articulée au premier module (1) et une deuxième extrémité connectée à la première roue (10), à la deuxième roue (20) ou à l'élément roulant (40), ce bras étant attaché au premier module (1) au moyen d'un élément élastique et où ce bras comprend un capteur de position angulaire qui mesure la position angulaire précise du bras à tout moment et transmet ces informations au dispositif de service, qui est configuré pour ajuster les calculs de transmission à chaque roue basé sur la position précise du bras détectée par ce capteur.
